# NEW EUROPEAN PATENT SPECIFICATION

(11) **EP 1 419 280 B2**
(45) Date of publication and mention of the opposition decision: **15.01.2014**
(45) Mention of the grant of the patent: 06.08.2008
(21) Application number: 02762423.8
(22) Date of filing: 31.07.2002
(51) Int. Cl.: C22C 21/06

(54) **ALUMINIUM-MAGNESIUM ALLOY PRODUCT**
PRODUKT AUS ALUMINIUM-MAGNESIUM-LEGIERUNG
PRODUIT EN ALLIAGE ALUMINIUM-MAGNESIUM

(30) Priority: 13.08.2001 EP 01203069; 03.01.2002 EP 02075047; 24.06.2002 EP 02077547
(43) Date of publication of application: 19.05.2004
(73) Proprietor: Aleris Aluminum Duffel BVBA, 2570 Duffel (BE); Aleris Aluminum Koblenz GmbH, 56070 Koblenz (DE)
(72) Inventor: VAN DER HOEVEN, Job, Anthonius, NL-2011 NM Haarlem (NL); ZUANG, Linzhong, NL-2331 MZ Leiden (NL); SCHEPERS, Bruno, B-2930 Brasschaat (BE); DE SMET, Peter, B-9830 Sint-Martens-Latem (BE); BAEKELANDT, Jean, Pierre, Jules, B-2500 Lier (BE)
(74) Representative: Müller Schupfner & Partner
(86) International application number: PCT/EP2002/008628
(87) International publication number: WO 2003/016580

(56) References cited:
- EP-A- 0 769 564
- EP-A- 0 799 900
- WO-A-00/26020
- WO-A1-97//38146
- JP-A- 7 034 208
- JP-A- 7 070 687
- US-A- 4 531 977
- US-A- 5 417 919
- US-A- 5 516 374
- CHEMICAL ABSTRACTS, vol. 127, no. 8, 25 August 1997 (1997-08-25) Columbus, Ohio, US; abstract no. 112094, KIKUCHI, MASAO ET AL: "Aluminum alloy sheets for fuel tanks and their manufacture by pickling or grinding" XP002177785 -& JP 09 165639 A (NIPPON STEEL CORP., JAPAN) 24 June 1997 (1997-06-24)
- R. DIF. ET AL.: 'The effect of Zinc Additons on the Corrosion Properties of Aluminium-Magnesium Alloys', vol. 3, 1998, JAPAN INST. OF LIGHT METALS, JAPAN pages 1489 - 94
- JR DAVIS ED.: 'ASM Handbook "Aluminum and Aluminum Alloys"', 1993, ASM INTERNATIONAL, USA pages 41,43,44 - 319, 320
- YOSHIKAWA, K. ET AL.: 'Formation mechanism of giant intermetallic compounds in 7N01 aluminum alloys', vol. 44, December 1994, JAPAN INST. OF LIGHT METALS, JAPAN pages 715 - 720
- R. DEVELAY: 'Propriétés de l'aluminium et des alliages d'aluminium corroyés', 1992, COPYRIGHT
- K. M. VAN MORN: 'Aluminum Properties, Physical Metallurgy and Phase Diagrams', vol. 1, 1967, COPYRIGHT, USA pages 195 - 197

## Description

The invention relates to an aluminium alloy product in the form of a rolled product or an extrusion. In another aspect, the invention relates to a welded structure, comprising such an alloy product.

Aluminium-magnesium alloy products are known to be used in the form of sheets or plates or extrusion in the construction of welded or joined structures such as marine and automotive applications, storage tanks, pressure vessels, vessels for land or marine structure. Wrought products are products that have been subjected to mechanical working by such processes as rolling, extruding, or forging. Rolled products may have a gauge typically to about 200 mm.

A known aluminium alloy having appropriate formability and weldability, is the Aluminium Association (AA)5454 alloy. Although the formability and weldability of the AA5454 alloy are sufficient for many applications, the alloy does not meet the desired higher strength levels. There is a constant drive toward down-gauging, for which a basic requirement is to increase the strength. With such fairly low Mg-level in the range of 2.4 to 3.0 wt.%, the alloy product is not susceptible to intergranular corrosion ("IGC").

The aluminium alloy AA5083, which has a Mg content in the range of 4.0 to 4.9 wt.%, having a higher strength level than AA5454, is known to be susceptible to IGC. This susceptibility to IGC is highly undesirable, because an alloy product that has low resistance against IGC cannot be used always in a reliable manner, in particular at service temperatures above 65°C.

The aluminium alloy AA5059, which has a Mg content in the range of 5.0-6.0 wt.%, a Mn content in the range of 0.6-1.2%, a Zn content in the range of 0.4-1.5 wt.%, and a mandatory Zr addition in the range of 0.05-0.25%, has an improved resistance to amongst others IGC, and provides a high strength also in the welded condition.

The Japanese document JP-A-9-165639 discloses an aluminum alloy sheet for fuel tanks, with a composition consisting of, by weight: 2.2-6.0% Mg, 0.03-0.15% Cu, 0.03-0.50% Mn, 0.03-0.35% Cr, ≤ 0.30% Fe, ≤0.20% Si, balance Al with optionally Zn.

WO 97/38146 relates to an Al-Mg alloy plate or extrusion with substantially improved strength in both soft and work-hardened tempers as compared to those of the standard AA5083 alloy. The material has ductility, bendability, pitting, stress and exfoliation corrosion resistances at least equivalent to those of AA5083. The composition is 5-6% Mg, > 0.6-12 Mn, 0.4-1.5 Zn, 0.05-0.25% Zr, up to 0.3% Cr, optional elements Ti, Fe, Si, Cu and Ag, remainder Al and inevitable impurities.

In spite of these references, there is still a great need for an improved aluminium alloy product having improved balance of strength, high formability and a good corrosion resistance, in particular against IGC.

It is an object of the present invention to provide an Al-Mg alloy sheet, plate or extrusion with improved formability as compared to those of the standard AA5083 alloy in the same temper. It is another object of the present invention to provide alloy sheets, plates or extrusions which can offer IGC resistance at least equivalent or better to those of AA5083, in combination with an elongation A50 of 24% or more. It is another object of the present invention to provide a method of manufacturing such alloy products.

According to the invention in one aspect there is provided an aluminium-magnesium alloy in the form of a rolled product or an extrusion as defined in claim 1.

By the invention can be provided an alloy product in the form of rolled product, sheet or plate, or extrusion that has a higher formability than AA5083when using the same or similar temper material.

Surprisingly, the alloy product according to the invention has good resistance against corrosion, in particular against IGC. It has been thought in the past that resistance against IGC is normally reduced when the Mg content exceeds about 3.0 wt.%, but the resistance against IGC of the alloy product according to the invention is high compared to most conventional AA5000-series alloy products with a Mg content of more than 4 wt.%. It has been found that the alloy product according to the invention has a weight loss of less than 25 mg/cm² when tested after sensitising at a temperature of 100°C during 100 hours in accordance with ASTM G67, and has a weight loss of less than 15 mg/cm² when tested after sensitising at a temperature of 85°C during 100 hours in accordance with ASTM G67, resulting in that the alloy product may be used at a service temperature of 65°C or more without any problems, e.g. typically at a service temperature of 80 to 100°C.

It is believed that the improved balance of properties available with the invention, particularly the higher strength and good formability in combination with the improved corrosion resistance, in particular against IGC, results from the balanced combination of the alloying elements Mg, Mn, Zn, and Cu in the given ranges. Particularly, it is believed that the Cu and Zn contents in the ranges according to the invention at such relatively high Mg levels optimise the resistance against corrosion, in particular the resistance against IGC and exfoliation corrosion, whereas the Mg and Mn contents in the given ranges optimise strength and formability of the alloy product.

Magnesium is the primary strengthening element in the alloy product. Mg levels above 4.8 wt.% do provide the required strength. The amount of Mg should not exceed 5.6 wt.%, in order to ensure an acceptable corrosion performance and workability, e.g. by means of rolling, of the alloy product as such high Mg levels. The Mg content in the alloy product is more than 4.8 wt.%. by which the alloy product is provided with a better optimised balance of tensile strength, yield strength, formability as measured by its elongation (A50), and its corrosion resistance.

Manganese is an essential additive element also. In combination with Mg, Mn provides the strength and formability in the alloy product as well as in the welds of the alloy product. A preferred range for the Mn content is 0.1 to 0.2 wt.%, and thereby providing a balance in providing sufficient grain size control and a good formability and in particular in achieving an elongation A50 of 24% or more in the final product.

Zinc is an important alloying element for achieving sufficient corrosion resistance in combination with a good formability of the alloy product. At least 0.40 wt.% Zn addition is required in order to achieve sufficient resistance against IGC. It has been found that for this alloy that at a Zn content above 0.75 wt.%, the uniform elongation is significantly reduced and thereby adversely affecting the formability of the alloy product, e.g. the reverse bendability is adversely affected. Preferably, the amount of Zn does not exceed 0.6 wt.%, in order to optimise the balance of desired characteristics of the alloy product, and to further optimise the uniform elongation. The most preferred range for the Zn addition is in the range of 0.4 to 0.6 wt.%.

Surprisingly, in a narrow range copper has been found to increase the resistance against IGC even though the Mg content is relatively high. Normally in the art, a deliberate Cu addition is avoided in alloys of this type, since it is thought to harm the resistance against corrosion. When Cu is present above 0.06 wt.% in combination with the zinc, a positive effect has been found on the resistance against IGC. However, Cu should be kept below 0.35 wt.% in order to avoid an adverse effect on the resistance against corrosion, in particular in the resistance against pitting corrosion. In an embodiment, the lower limit of Cu is more than 0.075 wt.%, and more preferably more than 0.10 wt.%. Herewith a good resistance against IGC is better save guarded. Preferably, the amount of Cu does not exceed 0.24 wt.%. Herewith the balance of desired characteristics is better achieved. More preferably, the amount of Cu not exceeding 0.18 wt.%, in order to preserve the corrosion resistance in a weld zone also. It is more preferred if Cu does not exceed 0.15 wt.%, to better ensure good corrosion resistance in a weld zone. Also, the general resistance against IGC in the alloy product is optimised.

Fe is not an essential alloying element, and tends to form for example Al-Fe-Mn compounds during casting, thereby limiting the beneficial effects of Mn. Therefore Fe must not be present in an amount of 0.35 wt.% or more. For the mechanical properties of the product, in particular to improve the formability of the alloy product, the amount of Fe is preferably to be kept below 0.2 wt.%.

Si is not an essential alloying element. It also combines with Fe to form coarse Al-Fe-Si phase particles which can affect the fatigue life and fracture toughness of for example the welded joints of the alloy product. For this reason, the Si level is kept to a maximum of 0.25 wt.%. Preferably the amount of Si is kept to a maximum of 0.2 wt.% and more preferably of 0.12 wt.%, and most preferably at a maximum of 0.1 wt.% in order to better ensure favourable formability characteristics of the alloy product.

Zirconium is not essential for achieving the improved corrosion performance in the alloy product according to the invention, but it can have an effect to achieve a more fine grain refined structure in the fusion zone of welded joints. Zr levels of 0.15 wt.% or more are to be avoided, and should be less than 0.12 wt.%, since this tends to result in very coarse needle-shaped primary particles with decrease in ease of fabrication of the alloy product and in the formability of the alloy product. Zr may cause to form undesirable coarse primaries, in particular together with Ti. In a preferred embodiment, the amount of Zr does therefore not exceed 0.05 wt.%. Moreover, it may be favourable to keep Zr out of scrap source material for specific recycling reasons. To this extend, it is more preferred to limit the presence of Zr to less than 0.02 wt.%.

Titanium is often used as a grain refiner during solidification of both cast ingots and welded joints produced using the alloy product of the invention. This effect is obtained with a Ti content of less than 0.3 wt.%, and preferably less than 0.15 wt.%. Ti may be replaced in part or in whole by V in the same compositional range to achieve a similar effect.

Chromium is an alloying element, that may improve further the corrosion resistance and strength of the alloy product. However, Cr limits the solubility of Mn and, if present, also that of Zr. Therefore, to avoid formation of undesirable coarse primaries, the Cr level must not be more than 0.2 wt.%. The Cr is present in a range of 0.06 to 0.2 wt.%, and more preferred range is 0.11 to 0.2 wt.%.

The balance is Al and inevitable impurities. Typically each impurity element is present at 0.05% maximum and the total of impurities is 0.15% maximum.

The aluminium alloy in the form of a rolled product may be provided in a wide range of gauges, for example up to 200 mm, but a preferred gauge for the alloy product according to the invention is in the range of 0.5 to 5 mm.

The alloy product according to the invention can be delivered in various temper conditions. However, for the group of applications for which the alloy product is ideally suited, preferably it should be a temper similar to a soft worked temper, also known in the art as an "O"-temper, or, in case of thin plates, a light "H"-strain hardened temper such as for example H111.

The invention further relates to a welded structure comprising at least one section of the product according to one of the above described embodiments. The alloy product according to one or more embodiments of the invention is eminently suitable for application in such a welded structure due to its excellent weldability, and its high strength in a weld zone in combination with its improved corrosion performance.

The invention further relates to a pressure vessel, in particular a welded pressure vessel, comprising a shell that comprises the rolled aluminium-magnesium alloy product as is described above. Due to the increased strength, such pressure vessel can be down-gauged to have a lower weight. Moreover, the corrosion properties can be improved. The pressure vessel, e.g. for a braking system, according to this aspect of the invention can be used at a higher service temperature, in particular above 65°C.

The alloy product in accordance with the invention may be employed also very successfully for automotive applications, in particular as body panels, and structural parts such as suspension systems and wheels.

In another aspect, the invention relates to a method of producing an aluminium alloy product comprising the sequential processing steps:-
(i). providing an intermediate alloy product having a composition according to the mentioned above and set forth in the claims;
(ii). cold working the intermediate alloy product to a final gauge to obtain an intermediate wrought product;
(iii). annealing the intermediate wrought product by heating the product at a heating rate in the range of 2 to 200°C/sec, holding the product at a soaking temperature in the range of 480 to 570°C for a duration of up to 100 sec, followed by a cooling at a cooling rate in the range of 10 to 500°C/sec to below a temperature of 150°C.
By this method it is achieved that the positive influence of Cu on the resistance against IGC is fully exploited. Although the alloy product has good properties when other annealing schemes are applied, it is believed that the positive influence of Cu on the corrosion properties is in particular enhanced by the annealing scheme of processing step (iii).

The aluminium alloy as described herein can be provided in process step (i) as an ingot or slab for fabrication into a suitable wrought product by casting techniques currently employed in the art for cast products, e.g. DC-casting, EMC-casting, EMS-casting. Slabs resulting from continuous casting, e.g. belt casters or roll casters, may be used also.

In order to obtain an intermediate product suitable for cold working, preferably by means of cold rolling, the provided intermediate alloy product can be hot worked by means of hot rolling or hot rolling in combination with one or more forging steps.

The annealing scheme of processing step (iii) can be applied in a continuous annealing facility. The required heating rates can be achieved, for example, by homogeneous heating by means of inductive heating. This gives further improved mechanical properties in the sheets or plates.

Particularly favourable results have been obtained in an embodiment of the method wherein the soaking temperature is in the range of between 520 and 550°C.

The balance of characteristics of the alloy product produced by the method is found to be better optimised in the embodiment wherein the product is held at the soaking temperature for a duration of up to 40 sec.

In an embodiment of the method, the heating rate is at least 50°C/sec, and preferably at least 80°C/sec. Herewith, the balance between the mechanical properties and the resistance against IGC has been found to be more favourable. This is especially the case when the cooling rate after soaking is at least 100 °C/sec.

The invention will now be explained with reference to laboratory experiments.

Various slabs were cast having chemical compositions as shown in the following Table 1, balance aluminium. Slab A corresponds to a standard AA5083 alloy, and Slabs B and C are according to the invention.

**Table 1: compositions (in wt%) of the cast slabs (Balance Al and impurities)**

| **Slab** | **Inv.** | **Mg** | **Mn** | **Zn** | **Cu** | **Cr** | **Fe** | **Si** | **Zr** | **Ti** |
|---|---|---|---|---|---|---|---|---|---|---|
| **A** | No | 4.5 | 0.50 | 0.03 | 0.005 | 0.10 | 0.31 | 0.16 | 0.001 | 0.015 |
| **B** | Yes | 5.23 | 0.17 | 0.51 | 0.12 | 0.16 | 0.23 | 0.10 | <0.01 | 0.02 |
| **C** | Yes | 5.23 | 0.17 | 0.51 | 0.12 | 0.16 | 0.23 | 0.10 | <0.01 | 0.02 |
| **D** | No | 5.36 | 0.50 | 0.50 | 0.12 | 0.15 | 0.20 | 0.11 | <0.01 | 0.02 |

The processing of the slabs A and B comprised a homogenisation anneal during 10 hours at a temperature of 510°C, hot rolling whereby the exit temperature was about 330°C, followed by cold rolling with 60% cold reduction and finally soft annealing in batch anneal at a temperature of 330°C during 1 hour. The processing of slabs C and D was identical to those of A and B, with the exception of the final soft anneal, which was a continuous anneal for 10 sec. at 530°C. Final gauges were 3 mm, and the plates were delivered in H111-temper.

These products were tensile tested according to EN 10002, and the results for the parallel (∥) and perpendicular (⊥) directions are given in Table 2.

**Table 2: Tensile strength ("UTS"), 0.2% Proof strength ("PS"), Elongation ("A50")**

| **Alloy** | **Direction of Testing** | **UTS [MPa]** | **PS [MPa]** | **A50 [%]** |
|---|---|---|---|---|
| **A (AA5083)** | ∥ | 299 | 149 | 19 |
| | ⊥ | 293 | 147 | 21 |
| **B** | ∥ | 311 | 146 | 22 |
| | ⊥ | 310 | 147 | 24 |
| **C** | ∥ | 317 | 153 | 25 |
| | ⊥ | 314 | 152 | 26 |
| **D** | ∥ | 332 | 166 | 23 |
| | ⊥ | 332 | 163 | 23 |

The elongation A50 is considered to be a measure for the formability. The results in table 1 indicate that the formability of the alloys B and C is improved when compared to alloys A (AA5083) or D. This effect is contributed to the lower amounts of Mn in alloys B and C.

The alloy products have been subjected to a weight loss test according to ASTM G67 after sensitising at 100°C for a duration of 100 hours in H111-temper condition. Results are shown in Table 3.

**Table 3: Weight loss (in mg/cm²) after sensitising.**

| | **A** | **B** | **C** | **D** |
|---|---|---|---|---|
| **100hr at 100 °C** | 36 | 17 | 13 | 20 |

This indicates that the corrosion resistance of products B and C is much better than of the standard AA5083 alloy (A). Product C is below 15 mg/cm², which is according to ASTM-G67 the upper limit for a product quality not susceptible to IGC, and product B is already close to this limit.

The resistance against IGC of product C in the presently used sensitising conditions show an improvement over that of B, apparently by using the continuous anneal the corrosion resistance of the product is improved. It is expected that under more severe sensitising conditions the difference is more clearly visible.

Alloy products B and C were welded without any problem using TIG welding under standard conditions.

In an additional test series, the influence of Cu on the corrosion resistance was tested. Some additional slabs were cast having the chemical compositions as shown in the following table 4, balance aluminium.

The processing of the additional alloys was identical to the processing of alloy C, i.e. with a final soft anneal as a continuous anneal.

**Table 4: composition (in wt%) of the additional cast slabs**

| **Slab** | **Inv.** | **Mg** | **Mn** | **Zn** | **Cu** | **Cr** | **Fe** | **Si** | **Zr** | **Ti** |
|---|---|---|---|---|---|---|---|---|---|---|
| **E** | No | 5.58 | 0.16 | 0.51 | 0.02 | 0.15 | 0.21 | 0.11 | <0.01 | 0.02 |
| **F** | Yes | 5.49 | 0.16 | 0.51 | 0.09 | 0.16 | 0.20 | 0.11 | <0.01 | 0.02 |
| **G** | Yes | 5.41 | 0.16 | 0.50 | 0.21 | 0.16 | 0.20 | 0.11 | <0.01 | 0.02 |
| **H** | Yes | 5.42 | 0.15 | 0.50 | 0.30 | 0.15 | 0.20 | 0.11 | <0.01 | 0.02 |
| **J** | No | 5.51 | 0.17 | 0.51 | 0.41 | 0.16 | 0.20 | 0.11 | <0.01 | 0.02 |

The alloy products have been subjected to a weight loss test according to ASTM G67 after sensitising at 100°C for a duration of 100 hours in H111 temper condition. The alloy products have also been subjected to an ASSET test according to ASTM G66 after welding, followed by sensitising at 100°C for a duration of 100 hours. The weld was a TIG weld using AA5183 as filler wire. Results are shown in table 5. The ASSET results correspond to the Heat Affected Zone, because here the most severe attack is found.

**Table 5: Weight Loss (in mg/cm²) and ASSET result after sensitising**

| **Alloy** | **% Cu** | **WL [mg/cm²]** | **ASSET result in HAZ** |
|---|---|---|---|
| **E** | 0.02 | 37 | N |
| **F** | 0.09 | 21 | PA |
| **C** | 0.12 | 13 | PA |
| **G** | 0.21 | 13 | PB |
| **H** | 0.30 | 11 | PB |
| **J** | 0.41 | 12 | PC |

According to ASTM G67 the upper limit for a product quality not susceptible to IGC is 15 mg/cm². In ASTM G66 the range to classify the results is given, but limits for acceptable or not acceptable are not specified. However, for a person skilled in the art, it is clear that pitting A is still acceptable whereas pitting C in unacceptable. Pitting B is for most applications still acceptable.

The results indicate that the resistance against IGC increases with increasing Cu content, but at the same time the resistance against pitting decreases. For a Cu level of 0.30 wt.% and lower, the resistance against pitting is acceptable or better than acceptable. The weight loss is thought to measure below 15 mg/cm² when the Cu level is above about 0.11 wt.%.

Based on these results it is concluded that the broadest operational window is found with Cu levels between 0.06 and 0.35 wt.%. Preferably the amount of Cu does not exceed 0.18 wt.% in order to preserve the corrosion resistance in a weld zone.

## Claims

1. Aluminium-magnesium alloy in the form of a rolled product or an extrusion, having the composition, in weight percent:
| | |
|---|---|
| Mg | 4.8-5.6 |
| Mn | 0.1-0.4 |
| Zn | 0.4-0.75 |
| Cu | 0.06-0.35 |
| Cr | 0.06-0.2 |
| Fe | 0.35 max., and preferably 0.2 max., |
| Si | 0.25 max. |
| Zr | 0.12 max. |
| Ti | 0.3 max., and preferably 0.15 max. |
impurities (each) max. 0.05, (total) max. 0.15 balance aluminium,
and having a weight loss of less than 25 mg/cm² when tested after sensitising at a temperature of 100°C during 100 hours in accordance with ASTM G67.

2. Product according to claim 1, wherein the amount of Zr does not exceed 0.05 wt.%, and preferably does not exceed 0.02 wt.%.

3. Product according to claim 1 or 2, wherein the amount of Cu is in the range of 0.075 to 0.24 wt.%, preferably in the range of 0.10 to 0.18 wt.%, and more preferably in the range of 0.10 to 0.15 wt.%.

4. Product according to any one of claims 1 to 3, wherein the amount of Mn is in the range of 0.1 to 0.2 wt.%.

5. Product according to any one of the claims 1 to 4, wherein the amount of Zn is in the range of 0.4 to 0.6 wt.%.

6. Product according to any one of claims 1 to 5, wherein the amount of Cr is in the range of 0.11 to 0.2 wt.%.

7. Product according to any one of claims 1 to 6, wherein the amount of Si is max. 0.2 wt.%, preferably max. 0.12 wt.% and more preferably max. 0.10 wt.%.

8. Product according to any one of claims 1 to 7, wherein the product is a rolled product having a gauge in the range of 0.5 to 5mm.

9. Product according to any one of claims 1 to 8, wherein the product is provided in an O-temper or an H-temper condition.

10. Method of producing a wrought aluminium-magnesium alloy product comprising the subsequent steps of:
(i.) providing an intermediate alloy product having a composition according to the composition mentioned in any one of the claims 1 to 7;
(ii.) cold working the intermediate alloy product to a final gauge to obtain an intermediate wrought product;
(iii.) annealing the intermediate wrought product by heating the product at a heating rate in the range of 2 to 200°C/sec, holding the product at a soaking temperature in the range of 520 to 570°C for a duration of up to 100 sec, followed by a cooling at a cooling rate in the range of 10 to 500°C/sec to below a temperature of 150°C.

11. Method according to claim 10, wherein the soaking temperature is in the range of between 520 and 550°C.

12. Method according to claim 10 or 11, wherein the product is held at the soaking temperature for a duration of up to 40 sec.

## Patentansprüche

1. Aluminium-Magnesium-Legierung in der Form eines Walzerzeugnisses oder einer Extrusion mit der Zusammensetzung (in Gew.-%):
Mg 4,8 - 5,6
Mn 0,1 - 0,4
Zn 0,4 - 0,75
Cu 0,06 - 0,35
Cr 0,06 - 0,2
Fe 0,35 max. und bevorzugt 0,2 max.,
Si 0,25 max.
Zr 0,12 max.
Ti 0,3 max. und bevorzugt 0,15 max.
Verunreinigungen (jeweils) max. 0,05, (insgesamt) max. 0,15
Rest Aluminium,
und mit einem Gewichtsverlust von weniger als 25 mg/cm² bei Prüfung nach Sensibilisierung bei einer Temperatur von 100 °C für 100 Stunden gemäß ASTM G67.

2. Erzeugnis nach Anspruch 1, wobei die Menge von Zr 0,05 Gew.-% nicht überschreitet und bevorzugt 0,02 Gew.-% nicht überschreitet.

3. Erzeugnis nach Anspruch 1 oder 2, wobei die Menge von Cu in dem Bereich von 0,075 bis 0,24 Gew.-%, bevorzugt in dem Bereich von 0,10 bis 0,18 Gew.-% und bevorzugter in dem Bereich von 0,10 bis 0,15 Gew.-% liegt.

4. Erzeugnis nach einem der Ansprüche 1 bis 3, wobei die Menge von Mn in dem Bereich von 0,1 bis 0,2 Gew.-% liegt.

5. Erzeugnis nach einem der Ansprüche 1 bis 4, wobei die Menge von Zn in dem Bereich von 0,4 bis 0,6 Gew.-% liegt.

6. Erzeugnis nach einem der Ansprüche 1 bis 5, wobei die Menge von Cr in dem Bereich von 0,11 bis 0,2 Gew.-% liegt.

7. Erzeugnis nach einem der Ansprüche 1 bis 6, wobei die Menge von Si max. 0,2 Gew.-%, bevorzugt max. 0,12 Gew.-% und bevorzugter max. 0,10 Gew.-% beträgt.

8. Erzeugnis nach einem der Ansprüche 1 bis 7, wobei das Erzeugnis ein Walzerzeugnis mit einer Dicke in dem Bereich von 0,5 bis 5 mm ist.

9. Erzeugnis nach einem der Ansprüche 1 bis 8, wobei das Erzeugnis in einem O-Temper- oder einem H-Temperzustand bereitgestellt wird.

10. Verfahren zum Herstellen eines Aluminium-Magnesium-Knetlegierungserzeugnisses, die folgenden aufeinanderfolgenden Schritte umfassend:
(i.) Bereitstellen eines Legierungszwischenerzeugnisses mit einer Zusammensetzung gemäß der Zusammensetzung, die in einem der Ansprüche 1 bis 7 genannt wird;
(ii.) Kaltformen des Legierungszwischenerzeugnisses zu einer Enddicke, um ein Zwischenkneterzeugnis zu erzielen;
(iii.) Glühen des Zwischenkneterzeugnisses durch Erwärmen des Erzeugnisses mit einer Erwärmungsgeschwindigkeit in dem Bereich von 2 bis 200 °C/Sek., Halten des Erzeugnisses bei einer Durchwärmtemperatur in dem Bereich von 520 bis 570 °C für eine Dauer von bis zu 100 Sek., gefolgt von einem Abkühlen mit einer Abkühlungsgeschwindigkeit in dem Bereich von 10 bis 500 °C/Sek. unter eine Temperatur von 150 °C.

11. Verfahren nach Anspruch 10, wobei die Durchwärmtemperatur in dem Bereich zwischen 520 und 550 °C liegt.

12. Verfahren nach Anspruch 10 oder 11, wobei das Erzeugnis für eine Dauer von bis zu 40 Sek. bei der Durchwärmtemperatur gehalten wird.

## Revendications

1. Alliage d'aluminium-magnésium sous la forme d'un produit laminé ou d'une extrusion, dont la composition par pourcentage en poids est la suivante :
Mg 4,8-5,6
Mn 0,1-0,4
Zn 0,4-0,75
Cu 0,06-0,35
Cr 0,06-0,2
Fe 0,35 maximum et de préférence 0,2 maximum Si 0,25 maximum
Zr 0,12 maximum
Ti 0,3 maximum, et de préférence 0,15 maximum
impuretés (chacune) 0,05 maximum, avec un maximum (total) de 0,15
reste aluminium,
et dont la perte de poids est inférieure à 25 mg/cm² au cours des essais après sensibilisation à une température de 100°C pendant une durée de 100 heures, en conformité avec la norme ASTM G67.

2. Produit selon la revendication 1, la quantité de Zr ne dépassant pas 0,05% en poids, et ne dépassant pas de préférence 0,02% en poids.

3. Produit selon la revendication 1 ou 2, la quantité de Cu se situant dans la gamme de 0,075 à 0,24% en poids, de préférence dans la gamme de 0,10 à 0,18% en poids, et de plus grande préférence dans la gamme de 0,10 à 0,15% en poids.

4. Produit selon l'une quelconque des revendications 1 à 3, la quantité de Mn se situant dans la gamme de 0,1 à 0,2% en poids.

5. Produit selon l'une quelconque des revendications 1 à 4, la quantité de Zn se situant dans la gamme de 0,4 à 0,6% en poids.

6. Produit selon l'une quelconque des revendications 1 à 5, la quantité de Cr se situant dans la gamme de 0,11 à 0,2% en poids.

7. Produit selon l'une quelconque des revendications 1 à 6, la quantité de Si étant de 0,2% maximum en poids, de préférence de 0,12% maximum en poids et de plus grande préférence de 0,10% maximum en poids.

8. Produit selon l'une quelconque des revendications 1 à 7, le produit étant un produit laminé dont l'épaisseur se situe dans la gamme de 0,5 à 5 mm.

9. Produit selon l'une quelconque des revendications 1 à 8, le produit étant fourni à l'état de trempe revenu O ou de trempe revenu H.

10. Procédé servant à fabriquer un produit en alliage d'aluminium-magnésium corroyé, comprenant les étapes ultérieures consistant à :
(i.) mettre à disposition un produit intermédiaire en alliage dont la composition est conforme à la composition mentionnée dans l'une quelconque des revendications 1 à 7 ;
(ii.) travailler à froid le produit intermédiaire en alliage jusqu'à une certaine épaisseur finale afin d'obtenir un produit de corroyage intermédiaire ;
(iii.) effectuer le recuit du produit de corroyage intermédiaire en chauffant le produit à une vitesse de chauffage se situant dans la gamme de 2 à 200°C/seconde, en maintenant le produit à une température d'égalisation dans la gamme de 520 à 570°C pendant une durée pouvant atteindre 100 secondes, ces opérations étant suivies d'un refroidissement à une vitesse de refroidissement se situant dans la gamme de 10 à 500°C/seconde jusqu'à une température qui soit inférieure à 150°C.

11. Procédé, selon la revendication 10, la température d'égalisation se situant dans la gamme de 520 à 550°C.

12. Procédé, selon la revendication 10 ou 11, le produit étant maintenu à la température d'égalisation pendant une durée allant jusqu'à 40 secondes.
